(19) Europäisches Patentamt / European Patent Office / Office européen des brevets

(11) **EP 3 040 910 B1**

(12) **FASCICULE DE BREVET EUROPEEN**

(45) Date de publication et mention de la délivrance du brevet:
**14.04.2021 Bulletin 2021/15**

(21) Numéro de dépôt: **15200541.9**

(22) Date de dépôt: **16.12.2015**

(51) Int Cl.:
*G06K 9/46* *(2006.01)*        *G06K 9/72* *(2006.01)*

(54) **PROCÉDÉ DE CLASSIFICATION D'UN DOCUMENT À PARTIR DE SON ASPECT VISUEL**

VERFAHREN ZUR KLASSIFIZIERUNG EINES DOKUMENTS NACH SEINEM AUSSEHEN

METHOD FOR CLASSIFYING A DOCUMENT FROM ITS VISUAL APPEARANCE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2014 FR 1462813**

(43) Date de publication de la demande:
**06.07.2016 Bulletin 2016/27**

(73) Titulaire: **SAGEMCOM DOCUMENTS SAS 92500 Rueil Malmaison (FR)**

(72) Inventeur: **BERGER, Jérôme 92500 RUEIL MALMAISON (FR)**

(74) Mandataire: **Cabinet Le Guen Maillet 3, impasse de la Vigie CS 71840 35418 Saint-Malo Cedex (FR)**

(56) Documents cités:
**EP-A1- 1 850 270**

- **SIVIC J ET AL: "Discovering Objects and their Localization in Images", COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, LOS ALAMITOS, CA, USA, vol. 1, 17 octobre 2005 (2005-10-17), pages 370-377, XP010854812, DOI: 10.1109/ICCV.2005.77 ISBN: 978-0-7695-2334-7**

- **PEDROSA GLAUCO V ET AL: "From Bag-of-Visual-Words to Bag-of-Visual-Phrases Using n-Grams", PROCEEDINGS - BRAZILIAN SYMPOSIUM ON COMPUTER GRAPHICS AND IMAGEPROCESSING, IEEE COMPUTER SOCIETY, LOS ALAMITOS, CA, US, 5 août 2013 (2013-08-05), pages 304-311, XP032524023, ISSN: 1530-1834, DOI: 10.1109/SIBGRAPI.2013.49 [extrait le 2013-11-05]**

- **A Pastor López-Monroy ET AL: "Bag-of-Visual-Ngrams for Histopathology Image Classification", Proc. of SPIE, 1 janvier 2013 (2013-01-01), pages 1-12, XP055219048, Extrait de l'Internet: URL:https://ccc.inaoep.mx/~mmontesg/public aciones/2013/BagOfVisualNgramsForHistopath ologyImageClassification-SIPAIM13.pdf [extrait le 2015-10-07]**

- **Szeliski Richard S ET AL: "Object instance recognition using feature symbol triplets", , 12 août 2008 (2008-08-12), pages 1-15, XP055219049, Extrait de l'Internet: URL:http://research.microsoft.com/pubs/694 22/tr-2007-53.pdf [extrait le 2015-10-07]**

- **Christian Siefkes ET AL: "Combining Winnow and Orthogonal Sparse Bigrams for Incremental Spam Filtering" In: "LECTURE NOTES IN COMPUTER SCIENCE", 1 janvier 2004 (2004-01-01), Springer Berlin Heidelberg, Berlin, Heidelberg, XP055218108, ISSN: 0302-9743 ISBN: 978-3-54-045234-8 vol. 3202, pages 410-421, DOI: 10.1007/978-3-540-30116-5_38, * le document en entier ***

- Scott Krig: "Interest Point Detector and Feature Descriptor Survey", Computer Vision Metrics, 26 mai 2014 (2014-05-26), XP055241490, Extrait de l'Internet: URL:http://link.springer.com/content/pdf/10.1007/978-1-4302-5930-5_6.pdf [extrait le 2016-01-14]
- DALAL N ET AL: "Histograms of Oriented Gradients for Human Detection", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 1, 20 juin 2005 (2005-06-20), pages 886-893, XP010817365, DOI: 10.1109/CVPR.2005.177 ISBN: 978-0-7695-2372-9
- MIKOLAJCZYK K ET AL: "A performance evaluation of local descriptors", IEEE TRANSACTIONS ON PATTERN ANALYSIS AND MACHINE INTELLIGENCE, IEEE COMPUTER SOCIETY, USA, vol. 27, no. 10, 1 octobre 2005 (2005-10-01), pages 1615-1630, XP002384824, ISSN: 0162-8828, DOI: 10.1109/TPAMI.2005.188
- BELONGIE S ET AL: "Matching shapes", PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, vol. 1, 7 juillet 2001 (2001-07-07), pages 454-461, XP010554016, ISBN: 978-0-7695-1143-6

**Description**

La présente invention concerne un procédé et un dispositif de classification d'un document à partir de son aspect visuel.

Historiquement, les méthodes de classification de documents par leur contenu reposent souvent sur des principes de sacs de mots.

Le principe du sac de mots présente l'avantage d'être conceptuellement simple et raisonnablement peu coûteux à implémenter tout en donnant des résultats exploitables.

Cependant, ce principe présente un inconvénient majeur car il ne prend pas en compte les relations spatiales entre les mots. Le principe du sac de mots ne fait pas la différence entre un ensemble de mots groupés dans un coin d'un document et les mêmes mots répartis dans le document.

Ces mots, situés dans un coin d'un document peuvent représenter un logo ou une marque alors que lorsqu'ils sont répartis dans le document, ils ne sont pas représentatifs de la marque ou du logo. Leur présence dans le document n'est que fortuite. Une classification de document basée sur ce principe est alors soumise à de multiples erreurs dans le classement de documents. Le document "Discovering objects and their location in images" par Sivic et al., publié à ICCV'05, propose d'apprendre une information géométrique entre des mots visuels en formant des paires de mots apparaissant dans un même voisinage.

D'autres méthodes de classification de documents reposent sur une étape préalable de reconnaissance de caractères suivie de l'utilisation d'une méthode connue de reconnaissance de documents texte. Ces méthodes présentent l'inconvénient de nécessiter une étape préalable coûteuse de reconnaissance de caractères, et présentent en outre l'inconvénient de s'appliquer uniquement aux documents composés principalement de texte.

La publication de C. Siefkes, F Assis, S Chhabra et W.S Yerazunis intitulée « Combining winnow and orthogonal sparse bigrams for incremental spam filtering » publiée dans « Proceedings of ECML/PKDD, LNCS, Springer Verlag, 2004 », pages 410 à 420 propose deux méthodes de classification de documents texte. La première méthode utilise les polynômes de hachage binaires clairsemés, en anglais « Sparse Binary Polynomial Hashing », qui considèrent toutes les combinaisons de $NN$ mots ou moins et préservant l'ordre du texte original. La seconde méthode utilise les bigrammes clairsemés orthogonaux, en anglais « Orthogonal Sparse Bigram ».

L'utilisation d'un sac de polynômes de hachage binaires clairsemés améliore la classification mais augmente sensiblement le coût de traitement.

L'utilisation d'un sac de bigrammes clairsemés orthogonaux donne des résultats comparables à la première méthode pour la classification de documents texte avec un coût bien moindre.

Les bigrammes clairsemés orthogonaux considèrent toutes les paires de mots espacés de moins d'un nombre prédéterminé de mots.

Les bigrammes clairsemés orthogonaux, comme les polynômes de hachage binaires clairsemés, ne sont utilisés que pour structurer des mots de texte seulement.

La présente invention a pour but de résoudre les inconvénients de l'art antérieur en proposant un procédé et un dispositif de classification d'un document à partir de son aspect visuel sur des documents numérisés sous la forme d'une image et qui ne nécessite pas, lorsque du texte est utilisé pour la classification du document, de reconnaissance de caractère préalablement au classement du document. En outre, la présente invention s'applique aussi bien aux documents comportant du texte qu'aux documents qui ne comportent que des images ou des photos.

A cette fin, selon un premier aspect, l'invention propose un procédé de classification selon la revendication 1.

La présente invention concerne aussi un dispositif de classification selon la revendication 7.

Ainsi, il est possible de classer un document à partir de son aspect visuel sans qu'il soit nécessaire d'effectuer une reconnaissance de caractère préalablement au classement du document.

La présente invention permet d'utiliser des polynômes de hachage, tels que des polynômes binaires clairsemés sans qu'il ne soit nécessaire d'effectuer une reconnaissance de caractères préalablement au classement du document.

Selon un mode particulier de l'invention, un polynôme de hachage est un bigramme.

Selon un mode particulier de l'invention, le contexte comporte en outre un écartement qui précise le nombre de mots intermédiaires présents entre le point d'ancrage et le second mot visuel.

Avec de tels polynômes de hachage appelés bigrammes clairsemés orthogonaux, la complexité, en terme calculatoire, d'un classement d'un document est réduite.

Selon un mode particulier de l'invention, chaque vecteur représentatif de la forme de l'image est déterminé à partir d'un voisinage circulaire autour de chaque point d'intérêt.

Ainsi, l'utilisation d'un voisinage circulaire permet d'obtenir une meilleure anisotropie.

Selon un mode particulier de l'invention, le voisinage circulaire comporte deux cercles, le cercle ayant le plus petit rayon comportant quatre zones et l'espacement entre les cercles comportant huit zones, les douze zones ayant une surface sensiblement identique.

Ainsi, le coût calculatoire est réduit par rapport à une analyse tenant compte de tous les pixels du voisinage indépendamment sans les regrouper en zones.

Selon un mode particulier de l'invention, les coordonnées de chaque vecteur représentatif de la forme de l'image sont obtenues à partir d'un vecteur gradient du point d'intérêt et de la moyenne des vecteurs gradients dans chaque zone du voisinage circulaire du point d'intérêt.

Ainsi, la forme de l'image au voisinage du point est bien représentée.

Selon un mode particulier de l'invention, l'extraction des points d'intérêt est effectuée en calculant pour chaque pixel des dérivées secondes partielles, en calculant le déterminant de la matrice hessienne et en ce que les points d'intérêt correspondent aux maxima locaux des déterminants de la matrice hessienne.

Ainsi, le coût calculatoire est réduit.

Selon un mode particulier de l'invention, les dérivées sont calculées à partir d'images intégrales.

Ainsi, le coût calculatoire est réduit.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

    la Fig. 1 représente un dispositif de classification de documents selon la présente invention ;
    la Fig. 2 représente un algorithme de classification de documents selon la présente invention ;
    les Figs. 3 représentent un exemple de noyaux utilisés pour le calcul de dérivées partielles pour extraire les points d'intérêt d'images à traiter selon un mode particulier de réalisation de la présente invention ;
    les Figs. 4 représentent un exemple de noyaux utilisés pour le calcul de dérivées partielles pour décrire les points d'intérêt de l'image à traiter selon un mode particulier de réalisation de la présente invention ;
    la Fig. 5a représente un exemple de voisinage circulaire utilisé pour la description de chaque point d'intérêt ;
    la fig. 5b représente une portion d'image dans le voisinage d'un point d'intérêt à laquelle le voisinage circulaire est superposé ;
    la Fig. 6 est un exemple qui montre que le vecteur caractéristique est représentatif des motifs présents au voisinage du point d'intérêt ;
    la Fig. 7 est un exemple d'image comprenant trois mots visuels.

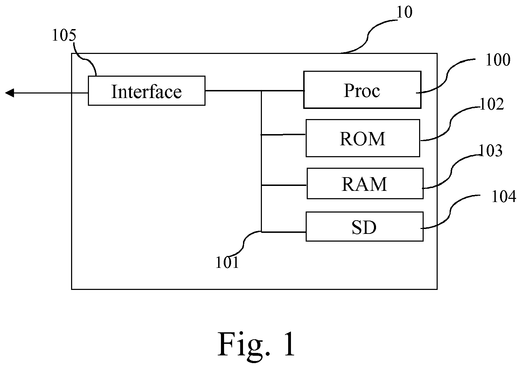

La **Fig. 1** représente un dispositif de classification de documents selon la présente invention.

Le dispositif de classification de documents 10 comprend :

- un processeur, micro-processeur, ou microcontrôleur 100 ;
- une mémoire volatile 103 ;
- une mémoire non volatile 102 ;
- éventuellement, un lecteur 104 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 105 avec un réseau de communication, comme par exemple un réseau local ou Internet par laquelle les documents traités par le dispositif de classification de documents 10 sont reçus et transférés à des moyens de stockage.
- un bus de communication reliant le processeur 100 à la mémoire ROM 103, à la mémoire RAM 103, au lecteur de médium de stockage 104 et à l'interface 105.

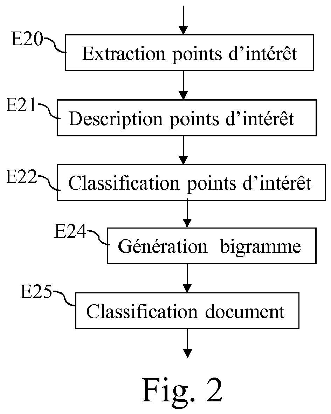

Le processeur 100 est capable d'exécuter des instructions chargées dans la mémoire volatile 103 à partir de la mémoire non volatile 102, d'une mémoire externe (non représentée), d'un support de stockage, tel qu'une carte SD ou autre, ou d'un réseau de communication. Lorsque le dispositif de classification de documents 10 est mis sous tension, le processeur 100 est capable de lire de la mémoire volatile 103 des instructions et de les exécuter. Ces instructions forment un programme d'ordinateur qui cause la mise en œuvre, par le processeur 100, de tout ou partie du procédé décrit en relation avec la Fig. 2.

Tout ou partie du procédé décrit en relation avec la Fig. 2 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 2** représente un algorithme de classification de documents selon la présente invention.

Plus précisément, le présent algorithme est exécuté par le processeur 100 du dispositif de classification de documents 10.

A l'étape E20, le processeur 100 extrait des points d'intérêt dans le document numérisé constitué d'un ensemble de pixels à traiter.

Un point d'intérêt est une position dans l'image, représentée généralement par une paire de coordonnées telles qu'une ligne et une colonne.

Pour cela, le processeur 100 identifie les points dans l'image constituée de pixels qui sont susceptibles d'être reconnus dans d'autres documents à traiter. Par exemple et de manière non limitative, le processeur 100 utilise un opérateur de Harris et M Stephens intitulé «A combined corner and edge détecter » publié dans « proceedings of the fourth Alvey vision conférence », 1998 pages 147 à 152 ou un détecteur tel que décrit dans le brevet US6711293 « Method and apparatus for identifying scale invariant features in an image and use of same for locating an object in an image » ou dans un détecteur de points d'intérêt tel que décrit dans la publication intitulée « Distinctive image features from scale invariant keypoints » et publiée dans la revue « Int. J. Comput. Vision t, 60, numéro 2, ISSN 0920 5691 pages 91 à 110 en novembre 2004 ou un détecteur de points d'intérêt tel que décrit dans le brevet US 8165401 intitulé « Robust interest point detector and descriptor ».

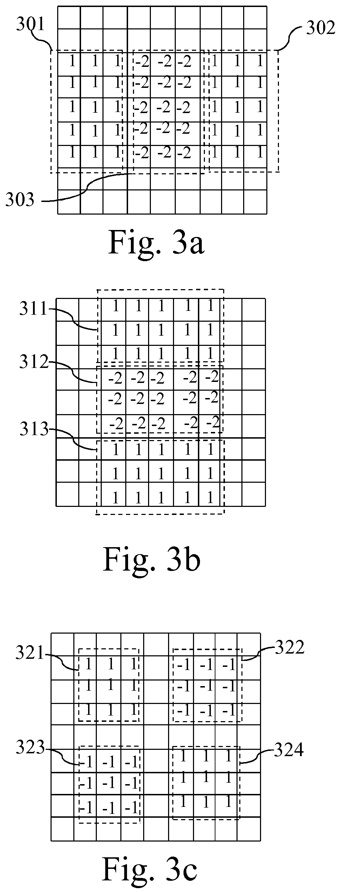

Préférentiellement, le processeur 100 utilise, pour chaque pixel les dérivées secondes partielles $D_{xx}$, $D_{yy}$, $D_{xy}$ en filtrant l'image originale I avec les noyaux tels que par exemple décrits en référence à la Fig. 3.

Les **Figs. 3** représentent un exemple de noyaux utilisés pour le calcul de dérivées partielles pour extraire les points d'intérêt d'une image à traiter selon un mode particulier de réalisation de la présente invention.

La Fig. 3a représente les noyaux utilisés pour calculer la dérivée seconde partielle $D_{xx}$ pour le pixel au centre du noyau.

Les valeurs 1 et -2 représentent les valeurs de coefficients appliqués aux valeurs des pixels du noyau placés à la position correspondante.

Pour l'ensemble des pixels compris dans la zone notée 301, les valeurs de ces pixels sont multipliées par le coefficient 1.

Pour l'ensemble des pixels compris dans la zone notée 302, les valeurs de ces pixels sont multipliées par le coefficient 1.

Pour l'ensemble des pixels compris dans la zone notée 303, les valeurs de ces pixels sont multipliées par le coefficient -2.

La Fig. 3b représente les noyaux utilisés pour calculer la dérivée seconde partielle $D_{yy}$ pour le pixel au centre du noyau.

Les valeurs 1 et -2 représentent les valeurs de coefficients appliqués aux valeurs des pixels du noyau placés à la position correspondante.

Pour l'ensemble des pixels compris dans la zone notée 311, les valeurs de ces pixels sont multipliées par le coefficient 1.

Pour l'ensemble des pixels compris dans la zone notée 312, les valeurs de ces pixels sont multipliées par le coefficient -2.

Pour l'ensemble des pixels compris dans la zone notée 313, les valeurs de ces pixels sont multipliées par le coefficient 1.

La Fig. 3c représente les noyaux utilisés pour calculer la dérivée seconde partielle $D_{xy}$ pour le pixel au centre du noyau.

Les valeurs 1 et -1 représentent les valeurs de coefficients appliqués aux valeurs des pixels du noyau placés à la position correspondante.

Pour l'ensemble des pixels compris dans la zone notée 321, les valeurs de ces pixels sont multipliées par le coefficient 1.

Pour l'ensemble des pixels compris dans la zone notée 322, les valeurs de ces pixels sont multipliées par le coefficient -1.

Pour l'ensemble des pixels compris dans la zone notée 323, les valeurs de ces pixels sont multipliées par le coefficient -1.

Pour l'ensemble des pixels compris dans la zone notée 324, les valeurs de ces pixels sont multipliées par le coefficient 1.

Selon un mode particulier de réalisation, au lieu de traiter chaque pixel des zones 301, 302, 303, 311, 312, 313, 321, 322, 323 et 324, le processeur 100 calcule, préalablement à l'étape E20, une image intégrale du document entier et utilise cette image intégrale pour calculer la somme des pixels de chaque zone 301, 302, 303, 311, 312, 313, 321, 322, 323 et 324.

Ceci permet d'accélérer le calcul de la somme des valeurs des pixels dans une zone rectangulaire d'une image.

L'image intégrale d'une image est une représentation sous la forme d'une image numérique qui permet de calculer rapidement des sommes de valeurs dans des zones rectangulaires.

C'est une représentation sous la forme d'une image, de même taille que l'image d'origine, qui en chacun de ses points contient la somme des pixels situés au-dessus et à gauche de ce point. Grâce à cette représentation sous forme de table de correspondance, la somme des valeurs dans une zone rectangulaire peut être calculée en seulement 4 accès à l'image intégrale et en temps constant quelle que soit la taille de la zone.

Cette somme peut se calculer par récurrence, par:

$$s(x,y) = s(x,y-1) + i(x,y)$$

$$ii(x,y) = ii(x-1,y) + s(x,y)$$

où $i(x,y)$ est un pixel de coordonnées x,y de l'image I, $ii(x,y)$ est le pixel correspondant dans l'image intégrale, $s(x,y)$ est la somme cumulée de la ligne x jusqu'à la colonne y.

Le processeur 100 calcule ensuite, pour chaque pixel, le déterminant de la matrice hessienne $H_{approx}$ selon la formule suivante :
$Det(H_{approx}) = D_{xx}D_{yy} - (wD_{xy})^2$ où $w$ est une constante. Par exemple et de manière à éviter des calculs en virgule flottante, $w = 29/32$.

Les points d'intérêt correspondent aux maxima locaux du déterminant de la matrice hessienne. Un maximum local est défini comme un point tel que le déterminant de la matrice hessienne en ce point est supérieur au déterminant de la matrice hessienne de chaque point

du voisinage.

$(l_m, c_m)$ sont les coordonnées d'un maximum local si $\det(H_{approx}(l_m, c_m)) > \det(H_{approx}(l, c))$ pour tout point $(l, c)$ du voisinage tel que $l_m\text{-}S \leq l \leq l_m + S$, $c_m\text{-}S \leq c \leq c_m + S$ et $(l, c) \neq (l_m, c_m)$.

Par exemple, $S=7$.

Le processeur 100 ne conserve ensuite que les points d'intérêt dont le déterminant de la matrice hessienne est supérieur à un seuil prédéterminé, $H_{min}$. Par exemple $H_{min} = \overline{H}_{min} M^2$ dans lequel $\overline{H}_{min}$ est égal par exemple à 4 et $M$ est la valeur maximale pouvant être prise par un pixel de l'image, par exemple, 1, 255 ou 65535.

Avantageusement, si le nombre de points d'intérêt dont le déterminant de la matrice hessienne est supérieur au seuil $H_{min}$ est plus grand qu'une valeur prédéterminée $N$, alors le processeur 100 ne conserve que les $N$ points d'intérêts dont le déterminant de la matrice hessienne est le plus grand. Par exemple, $N$ est compris entre 100 et 1000.

A l'étape suivante E21, le processeur 100 effectue une description des points d'intérêt. Pour cela, le processeur 100 associe un descripteur à chaque point d'intérêt. Par exemple, le descripteur est un vecteur de caractéristiques représentatives de l'aspect visuel du point. Le descripteur est appelé par la suite vecteur caractéristique.

De manière générale, un vecteur caractéristique est un ensemble de mesures effectuées au voisinage d'un point d'intérêt. Chaque point d'intérêt a un unique vecteur caractéristique, mais un même vecteur caractéristique peut décrire plusieurs points d'intérêt si les mesures de leurs voisinages sont identiques. Un vecteur caractéristique peut aussi n'être représentatif d'aucun point d'intérêt observé. Par exemple, la position d'un nœud dans la méthode de gaz neuronal adaptatif décrite ultérieurement est un vecteur caractéristique qui est initialisé à partir d'un point d'intérêt mesuré mais qui évolue. Un vecteur caractéristique est représenté par une liste de valeurs numériques comportant par exemple 24 valeurs.

Le descripteur est par exemple construit de manière à ce que des points d'aspects similaires aient des descripteurs proches, même si les conditions de luminosité, de contraste, d'orientation ou de taille changent. Par exemple et de manière non limitative, le processeur utilise pour cela la méthode telle que décrite dans le brevet US6711293 « Method and apparatus for identifying scale invariant features in an image and use of same for locating an object in an image » ou dans la publication intitulée « Distinctive image features from scale invariant keypoints » et publiée dans la revue « Int. J. Comput. Vision », t. 60, numéro 2, ISSN 0920 5691, pages 91 à 110 en novembre 2004 ou dans le brevet US 8165401 intitulé « Robust interest point detector and descriptor ».

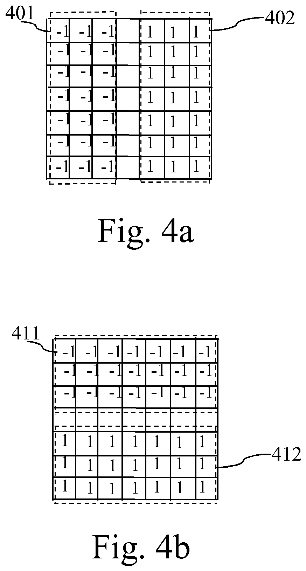

Préférentiellement, le processeur 100 calcule, pour chaque point d'intérêt, un vecteur gradient de coordonnées $D_x$ et $D_y$ correspondant aux dérivées partielles horizontales et verticales à partir des noyaux tels que représentés en Fig. 4.

Les **Figs. 4** représentent un exemple de noyaux utilisés pour le calcul de dérivées partielles pour décrire les points d'intérêt d'une image à traiter selon un mode particulier de réalisation de la présente invention.

La Fig. 4a représente les noyaux utilisés pour calculer la dérivée partielle $D_x$ pour le pixel au centre du noyau.

Les valeurs 1 et -1 représentent les valeurs de coefficients appliqués aux valeurs des pixels du noyau placés à la position correspondante.

Pour l'ensemble des pixels compris dans la zone notée 401, les valeurs de ces pixels sont multipliées par le coefficient 1.

Pour l'ensemble des pixels compris dans la zone notée 402, les valeurs de ces pixels sont multipliées par le coefficient -1.

La Fig. 4b représente les noyaux utilisés pour calculer la dérivée partielle $D_y$ pour le pixel au centre du noyau.

Les valeurs 1 et -1 représentent les valeurs de coefficients appliqués aux valeurs des pixels du noyau placés à la position correspondante.

Pour l'ensemble des pixels compris dans la zone notée 411, les valeurs de ces pixels sont multipliées par le coefficient -1.

Pour l'ensemble des pixels compris dans la zone notée 412, les valeurs de ces pixels sont multipliées par le coefficient 1.

Les vecteurs gradients calculés, le processeur 100 découpe un voisinage circulaire autour de chaque point d'intérêt aligné sur le vecteur gradient du point d'intérêt.

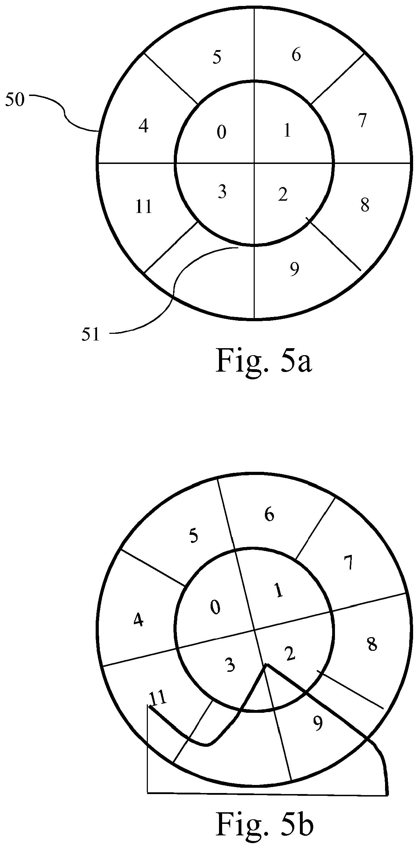

Un exemple de voisinage circulaire est donné en Fig. 5.

La **Fig. 5a** représente un exemple de voisinage circulaire utilisé pour la description de chaque point d'intérêt.

La Fig. 5a représente un voisinage circulaire constitué de douze zones notées 1 à 12. Le centre du voisinage est placé sur le point d'intérêt.

Le rayon du cercle noté 51 est de quatre pixels et le rayon du cercle noté 50 est de sept pixels.

D'autres valeurs de rayons peuvent être utilisées, préférentiellement les valeurs des rayons des cercles 50 et 51 ont un rapport égal à $\sqrt{3}$.

Pour chaque zone du voisinage circulaire, le processeur 100 calcule la moyenne du vecteur gradient et projette celle-ci dans le repère local de celle-ci. $\overrightarrow{(D_x^{(r)}, D_y^{(r)})}$ est le vecteur gradient du point d'intérêt, $\overrightarrow{(\overline{D}_x^{(i)}, \overline{D}_y^{(i)})}$ est la moyenne des vecteurs gradients des pixels de la zone $i$ du voisinage circulaire du point d'intérêt, $\overrightarrow{\widetilde{D_x^{(i)}}, \widetilde{D_y^{(i)}}}$ le vecteur projeté est défini par :

$$\widetilde{D_x^{(i)}} = \overline{D_x^{(i)}} D_x^{(r)} + \overline{D_y^{(i)}} D_y^{(r)}$$

$$\widetilde{D_y^{(i)}} = \overline{D_x^{(i)}} D_y^{(r)} - \overline{D_y^{(i)}} D_x^{(r)}$$

Le processeur 100 construit ensuite un vecteur caractéristique $F_r$ pour chaque point d'intérêt en concaténant les 12 vecteurs projetés :

$$F_r = (\widetilde{D_x^{(0)}}, \widetilde{D_y^{(0)}}, \widetilde{D_x^{(1)}}, \widetilde{D_y^{(1)}}, ..., \widetilde{D_x^{(11)}}, \widetilde{D_y^{(11)}})$$

Dans d'autres modes de réalisation le voisinage circulaire pourrait comprendre un nombre différent de cercles et un nombre différent de zones.

Dans un mode de réalisation, le voisinage circulaire est constitué du seul cercle 51, le cercle 51 étant divisé en quatre zones de tailles et formes identiques (ici les zones 0, 1, 2 et 3).

Dans d'autres modes de réalisation, un nombre supérieur à un de cercles centrés sur le point d'intérêt sont utilisés, les rayons de chaque cercle et le nombre de zones étant choisi de telle sorte que les zones aient toute une surface identique.

Dans un mode de réalisation, un troisième cercle comportant douze zones est ajouté aux cercles 50 et 51, le troisième cercle ayant un rayon deux fois supérieur au rayon du cercle 50.

Dans un mode de réalisation, le cercle 50 comporte six zones. Dans le cas, le rayon du cercle 50 est égal au rayon du cercle 51 multiplié par $\sqrt{5/2}$.

La **Fig. 5b** représente une portion d'image dans le voisinage d'un point d'intérêt à laquelle le voisinage circulaire est superposé.

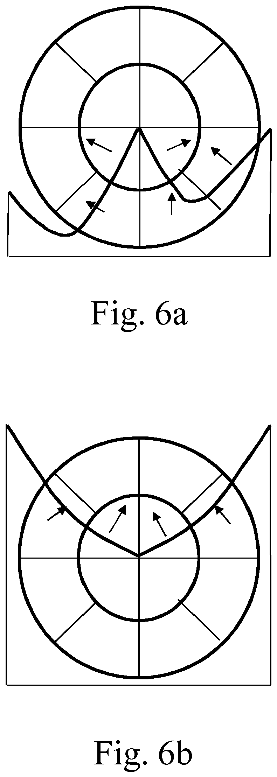

Les **Fig. 6** montrent deux exemples qui montrent que le vecteur caractéristique est représentatif des motifs présents au voisinage du point d'intérêt.

Il est à remarquer ici que le vecteur caractéris-tique $F_r$ est insensible à l'orientation, à la luminosité et au contraste après normalisation en un vecteur $F$. La normalisation consiste à diviser un vecteur par sa longueur, c'est-à-dire diviser chaque coordonnée du vecteur par la racine carrée de la somme des carrés des coordonnées du vecteur.

L'orientation du voisinage circulaire correspond à l'orientation du vecteur $F$.

A l'étape suivante E22, le processeur 100 classifie les points d'intérêt, c'est-à-dire qu'il associe à chaque point d'intérêt, un identifiant de telle sorte que les points d'intérêt qui ont des vecteurs caractéristiques similaires sont associés au même identifiant et que les points d'intérêt qui ont des vecteurs caractéristiques très différents sont associés à des identifiants distincts.

Par exemple, le processeur 100 peut utiliser une méthode de coalescence (« $k$-means » en anglais).

Préférentiellement, le processeur 100 utilise une méthode de gaz neuronal adaptatif (« Adaptive Neural Gas » ou « ANG » en anglais) tel que décrit dans le brevet FR 2 984 541. Pour cela, le processeur 100 constitue une liste de nœuds, chaque nœud étant constitué d'un identifiant appelé « mot visuel », d'une position dans l'espace des caractéristiques et d'un âge. Le processeur 100 sélectionne ensuite l'identifiant du nœud dont la position est la plus proche du vecteur caractéristique $F$ recherché.

Un mot visuel est un identifiant abstrait qui représente un ensemble de vecteurs caractéristiques proches les uns des autres. Chaque vecteur caractéristique est représenté par un unique mot visuel et par conséquent chaque point d'intérêt est une instance d'un unique mot visuel. Chaque mot visuel peut être présent plusieurs fois dans l'image s'il représente les vecteurs caractéristiques de plusieurs points d'intérêt distincts. Un mot visuel est généralement représenté par un nombre entier.

Un nœud est une structure utilisée par la méthode de gaz neuronal adaptatif pour associer des informations supplémentaires à un mot visuel. Quand on utilise la méthode de gaz neuronal adaptatif, il y a exactement un nœud par mot visuel. Il peut ne pas y avoir de nœuds si on utilise une autre méthode de classification. Un nœud est constitué d'un mot visuel (nombre entier), d'une position (vecteur caractéristique) et d'un âge (entier positif).

Le processeur 100 détermine un mot visuel pour chaque point d'intérêt extrait, le mot visuel est déterminé à partir du vecteur caractéristique de telle sorte que des vecteurs caractéristique proches sont associés au même mot visuel,

La classification s'effectue à partir des paramè-tres suivants :

- $\varepsilon_0$, $\varepsilon_1$ qui décrivent le taux d'adaptation, $0 < \varepsilon_1 < \varepsilon_0 < 1$, par exemple $\varepsilon_0 = 0{,}01$ et $\varepsilon_1 = 0{,}0001$,
- $D$ qui représente la distance minimale au-delà de laquelle un nouveau nœud est ajouté, $D > 0$, par exemple $D = 0{,}2$,
- $A$ qui représente l'âge maximal au-delà duquel un nœud est supprimé, $A > 0$, par exemple $A = 10000$.

Un apprentissage effectué préalablement ou à la volée, est effectué. Une liste de nœud vide est initialisée et à chaque échantillon d'apprentissage $x^{(t)}$, le processeur 100 effectue les opérations suivantes :

- Le processeur 100 trie la liste des nœuds par ordre croissant de distance avec le nouvel échantillon,
- Si la liste est vide ou si la distance du nouvel échantillon avec le premier nœud de la liste est supérieure à D, le processeur 100 insère un nouveau nœud au début de la liste triée,

- Le processeur 100 initialise la position du nouveau nœud à $l_0^{(t)} = x^{(t)}$,

- Le processeur 100 initialise l'âge du nouveau nœud à $a_0^{(t)} = 0$,

- Le processeur 100 associe un identifiant unique, égal par exemple au nombre total de nœuds créés jusqu'alors, y compris les nœuds qui ont été supprimés, cet identifiant est le mot visuel associé au nœud,

- Si la liste n'est pas vide, le processeur 100 réinitialise l'âge du premier nœud de la liste à 0,

- Le processeur 100 met à jour les positions de tous les nœuds en utilisant la formule suivante :

$$\lambda^{(t)} = \begin{cases} 1 \; si \; N^{(t)} = 1 \\ \frac{N^{(t)}-1}{ln\varepsilon_0 - ln\varepsilon_1} \; sinon \end{cases}$$ où $N^{(t)}$ est le nombre de nœuds dans la liste,

- Pour chaque $i \in [0, N^{(t)}[$, le processeur 100 remplace la position du nœud $i$ par $l_i^{(t+1)} = l_i^{(t)} + \varepsilon_0 e^{-i\bar{\lambda}(t)}(x^{(t)} l_i^{(t)})$,

- Le processeur 100 incrémente l'âge de tous les nœuds de la liste,

- Le processeur 100 supprime les nœuds dont l'âge est supérieur à $A$.

Le processeur 100 classifie chaque vecteur caractéristique $F$. Le processeur 100 cherche le nœud dont la position est la plus proche de $F$. Si la distance entre $F$ et la position du nœud le plus proche est supérieure à $D$, $F$ correspond à un mot visuel inconnu. Il est à remarquer ici que ce cas ne peut pas se produire si l'apprentissage est effectué à la volée. En effet si $F$ est trop éloigné des positions des nœuds qui existaient avant l'apprentissage, alors le processeur 100 crée un nouveau mot visuel et ajoute un nouveau nœud dont la position est égale à $F$. Si la distance entre $F$ et la position du nœud le plus proche est inférieure à $D$, $F$ est une représentation du mot visuel du nœud le plus proche.

A l'étape suivante E24, le processeur 100 détermine un ou plusieurs polynômes de hachage pour chaque point d'intérêt, chaque polynôme de hachage comporte au moins un mot visuel qui sert de point d'ancrage du polynôme de hachage et un contexte constitué d'au moins un second mot visuel représentatif d'une position dans une liste triée de mots visuels.

Préférentiellement, le processeur 100 détermine, pour chaque point d'intérêt, un bigramme clairsemé orthogonal.

Un bigramme clairsemé orthogonal est constitué de trois éléments. Un premier mot qui sert de point d'ancrage au bigramme, un second mot qui précise le contexte du bigramme et un écartement qui précise le nombre de mots intermédiaires présents entre le point d'ancrage et le contexte.

En variante, un bigramme clairsemé orthogonal est constitué de deux éléments. Un premier mot qui sert de point d'ancrage au bigramme et un second mot qui précise le contexte du bigramme.

Le processeur 100 détermine pour chaque mot visuel présent dans le document et obtenu à l'étape précédente, un nombre NB de bigrammes clairsemés orthogonaux. Par exemple, NB est égal à 6.

En variante, le processeur 100 détermine pour chaque mot visuel présent dans le document et obtenu à l'étape précédente, les bigrammes clairsemés orthogonaux qui ont un écartement inférieur à un seuil prédéterminé $\Delta$, par exemple égal à 5% de la largeur de l'image traitée.

Pour chaque mot visuel $w_a$, le processeur 100 :

- trie la liste des autres mots visuels précédemment déterminée par ordre de distance spatiale croissante par rapport à la position du mot visuel $w_a$ dans l'image,

- prend les NB premiers mots visuels de la liste triée et pour chaque mot visuel sélectionné $w_c$, le processeur construit un bigramme clairsemé orthogonal avec $w_a$ comme point d'ancrage, $w_c$ comme contexte et l'ordre de $w_c$ dans la liste triée comme écartement entre $w_a$ et $w_c$.

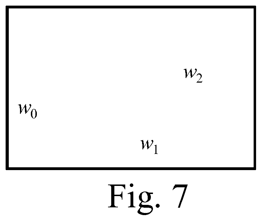

La **Fig. 7** est un exemple d'image comprenant trois mots visuels.

L'image de la Fig. 7 comporte trois mots visuels notés $w_0$, $w_1$, et $w_2$. Le processeur construit six bigrammes clairsemés orthogonaux $(w_0, w_1, 0)$, $(w_0, w_2, 1)$, $(w_1, w_2, 0)$, $(w_1, w_0, 1)$, $(w_2, w_1, 0)$ et $(w_2, w_1, 1)$.

A l'étape suivante E25, le processeur 100 classifie le document à partir d'un score déterminé à partir des polynômes de hachage.

Par exemple, et de manière non limitative, le processeur 100 utilise la méthode de classification, dite méthode Winnow, telle que décrite dans la publication de C. Siefkes, F Assis, S Chhabra et W.S Yerazunis intitulée « Combining winnow and orthogonal sparse bigrams for incremental spam filtering ».

La méthode Winnow est une méthode statistique non probabiliste qui consiste à déterminer une liste de poids $w_{cp}(w_0, w_1, s)$ pour chaque classe $cp$ et chaque bigramme clairsemé orthogonal $(w_0, w_1, s)$ et à calculer un score $\Omega_{cp}(D_c)$ pour le document $D_c$ et pour la classe $cp$ basé sur la moyenne des poids des bigrammes clairsemés orthogonaux présents dans le document $D_c$.

On note que la méthode Winnow, appliquée ici à des bigrammes clairsemés orthogonaux, est applicable à tout type de polynôme de hachage. En effet, le calcul d'un score par la méthode Winnow n'utilise aucune spécificité des bigrammes clairsemés orthogonaux par rapport aux polynômes de hachage, mais prend uniquement en compte leur présence ou leur absence dans le document.

Le processeur 100 considère alors que le document appartient à la classe *cp* si son score est supérieur à un seuil $\theta$ prédéterminé, par exemple égal à un.

La classification nécessite un apprentissage, effectué préalablement ou à la volée, qui consiste à apprendre les poids des bigrammes clairsemés orthogonaux pour chaque classe. Les poids sont initialisés à la valeur 1, puis mis à jour à chaque fois que la classification, détectée par un humain, se trompe. Si un document $D_c$ appartient à une classe *cp* et que son score est inférieur au seuil prédéterminé $\theta$, les poids des bigrammes clairsemés orthogonaux du document $D_c$ sont multipliés par un facteur de promotion $\alpha$ supérieur à l'unité. Si un document $D_c$ n'appartient pas à une classe *cp* et que son score est supérieur au seuil prédéterminé $\theta$, les poids des bigrammes clairsemés orthogonaux du document $D_c$ sont multipliés par un facteur de rétrogradation $\beta$ inférieur à l'unité.

Dans un mode particulier de réalisation, au lieu d'utiliser un seuil prédéterminé $\theta$, le processeur 100 utilise deux seuils prédéterminés $\theta^-$ et $\theta^+$, et considère que les scores compris entre ces deux seuils étaient une erreur quelle que soit la classe attendue.

Par exemple, $\alpha$ est égal à 1,23, $\beta$ est égal à 0,83, $\theta^-$ est égal à 0,95 et $\theta^+$ est égal à 1,05.

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

La présente invention est décrite dans un exemple où le document à classifier est un document en niveaux de gris. La présente invention trouve aussi application dans un exemple où le document à classifier est un document en couleur.

Dans ce cas, le procédé est appliqué indépendamment sur chaque composante de l'image couleur et en regroupant les mots visuels de toutes les composantes pour générer des bigrammes clairsemés orthogonaux et classifier le document.

La présente invention est décrite dans un exemple dans lequel les bigrammes clairsemés orthogonaux sont utilisés. Il est aisé de transposer la présente invention dans le cadre des polynômes de hachage binaires clairsemés.

Le processeur 100 utilise la liste triée des mots visuels voisins pour construire des polynômes de hachage binaires clairsemés.

Un polynôme de hachage binaire clairsemé est constitué de deux éléments. Un mot qui sert de point d'ancrage et une séquence de positions dans la liste triée qui précise le contexte, chaque position dans la liste triée pouvant soit être vide ou contenir un mot visuel.

Dans le cas d'un document sous forme de pixels, pour chaque mot visuel, le processeur 100 construit $2^{NB}$ polynômes de hachage binaires clairsemés de longueur NB qui ont le mot visuel comme point d'ancrage.

Pour chaque mot visuel $w_a$, le processeur 100 :

- Trie la liste des autres mots visuels présents dans l'image par ordre de distance spatiale croissante par rapport à la position du mot visuel $w_a$ dans l'image,
- Construit $2^{NB}$ polynômes de hachage binaires clairsemés en considérant toutes les combinaisons possibles.

Ainsi, selon l'exemple de la Fig. 7, le processeur 100 détermine douze polynômes de hachage binaires clairsemés : $(w_0, \_, \_)$, $(w_0, w_1, \_)$, $(w_0, \_, w_2)$, $(w_0, w_1, w_2)$, $(w_1, \_, \_)$, $(w_1, w_2, \_)$, $(w_1, \_, w_0)$, $(w_1, w_2, w_0)$, $(w_2, \_, \_)$, $(w_2, w_1, \_)$, $(w_2, \_, w_0)$ et $(w_2, w_1, w_0)$.

## Revendications

1. Procédé de classification d'un document à partir de son aspect visuel, le document étant sous la forme d'une image constituée de pixels, le procédé comporte les étapes de :

   - extraction (E20) de points d'intérêt dans l'image,
   - description (E21) de chaque point d'intérêt extrait à l'aide d'un vecteur représentatif de la forme de l'image dans un voisinage du point d'intérêt,
   - détermination (E22) d'un mot visuel pour chaque point d'intérêt extrait, le mot visuel étant déterminé à partir du vecteur caractéristique de telle sorte que des vecteurs caractéristiques proches sont associés au même mot visuel,
   - détermination (E24) d'un ou plusieurs polynômes de hachage pour chaque point d'intérêt,
   - classification (E25) du document, dans une classe d'une pluralité de classes, à partir d'un score déterminé à partir des polynômes de hachage, le score étant une moyenne de poids des polynômes de hachage présent dans le document ;

   **caractérisé en ce que** :

   - chaque vecteur représentatif de la forme de l'image est déterminé à partir d'un voisinage circulaire autour de chaque point d'intérêt, le voisinage circulaire étant aligné sur le vecteur gradient du point d'intérêt et comportant au moins un cercle, ledit cercle étant divisé en une pluralité de zones, chaque zone de chaque cercle ayant une surface identique, les coordonnées de chaque vecteur représentatif de la forme de l'image étant obtenues à partir d'un vecteur gradient du point d'intérêt et de la moyenne des vecteurs gradients dans chaque zone du voisinage circulaire du point d'intérêt ; **en ce que**, chaque polynôme de hachage comporte au moins un premier mot visuel associé au point d'intérêt qui sert de point d'ancrage du polynôme de hachage et une séquence de positions dans une liste qui précise le contexte du premier mot visuel, la liste étant constituée de seconds mots visuels triés par ordre de distance croissante de leur position spatiale dans l'image par rapport à une position spatiale dans l'image du premier mot visuel, chaque position de la séquence de positions étant soit un élément vide soit le second mot visuel présent à cette position dans ladite liste.

2. Procédé selon la revendication 1, **caractérisé en ce qu'**un polynôme de hachage est un bigramme.

3. Procédé selon la revendication 1 ou 2, **caractérisé en ce que** le contexte comporte en outre un écartement qui précise le nombre de mots intermédiaires présents entre le point d'ancrage et le second mot visuel.

4. Procédé selon la revendication 1, 2 ou 3, **caractérisé en ce que** le voisinage circulaire comporte deux cercles, le cercle ayant le plus petit rayon comportant quatre zones et l'espacement entre les cercles comportant huit zones, les douze zones ayant une surface identique.

5. Procédé selon l'une quelconque des revendications précédentes, **caractérisé en ce que** l'extraction des points d'intérêt est effectuée en calculant pour chaque pixel des dérivées secondes partielles, en calculant le déterminant de la matrice hessienne et **en ce que** les points d'intérêt correspondent aux maxima locaux des déterminants de la matrice hessienne.

6. Procédé selon la revendication 5, **caractérisé en ce que** les dérivées sont calculées à partir d'images intégrales.

7. Dispositif de classification d'un document à partir de son aspect visuel, le document étant sous la forme d'une image constituée de pixels, le dispositif comporte :

   - des moyens d'extraction de points d'intérêt dans l'image,
   - des moyens de description de chaque point d'intérêt extrait à l'aide d'un vecteur représentatif de la forme de l'image dans un voisinage du point d'intérêt,
   - des moyens de détermination d'un mot visuel pour chaque point d'intérêt extrait, le mot visuel étant déterminé à partir du vecteur caractéristique de telle sorte que des vecteurs caractéristiques proches sont associés au même mot visuel,
   - des moyens de détermination d'un ou plusieurs polynômes de hachage pour chaque point d'intérêt,
   - des moyens de classification du document dans une classe d'une pluralité de classes à partir d'un score déterminé à partir des polynômes de hachage, le score étant basé sur une moyenne de poids des polynômes de hachage présents dans le document ;

   **caractérisé en ce que** le dispositif comprend :

   des moyens de détermination de vecteurs représentatifs de la forme de l'image à partir d'un voisinage circulaire autour de chaque point d'intérêt, le voisinage circulaire étant aligné sur le vecteur gradient du point d'intérêt et comportant au moins un cercle, ledit cercle étant divisé en une pluralité de zones, chaque zone de chaque cercle ayant une surface identique, les coordonnées de chaque vecteur représentatif de la forme de l'image étant obtenues à partir d'un vecteur gradient du point d'intérêt et de la moyenne des vecteurs gradients dans chaque zone du voisinage circulaire du point d'intérêt,
   et **en ce que**, **en ce que**, chaque polynôme de hachage comporte au moins un premier mot visuel associé au point d'intérêt qui sert de point d'ancrage du polynôme de hachage et une séquence de positions dans une liste qui précise le contexte du premier mot visuel, la liste étant constituée de seconds mots visuels triés par ordre de distance croissante de leur position spatiale dans l'image par rapport à une position spatiale dans l'image du premier mot visuel, chaque position de la séquence de positions étant soit un élément vide soit le second mot visuel présent à cette position dans ladite liste.

8. Programme d'ordinateur, **caractérisé en ce qu'**il comprend des instructions pour mettre en œuvre, par un dispositif (10), le procédé selon l'une quelconque des revendications 1 à 6 lorsque ledit programme est exécuté par un processeur (100) dudit dispositif.

9. Moyens de stockage, **caractérisés en ce qu'**ils stockent un programme d'ordinateur comprenant des instructions pour mettre en œuvre, par un dispositif (10), le procédé selon l'une quelconque des revendications 1 à 6 lorsque ledit programme est exécuté par un processeur (100) dudit dispositif.

## Patentansprüche

1. Verfahren zur Klassifizierung eines Dokuments nach seinem Aussehen, wobei das Dokument in der Form eines aus Pixeln bestehenden Bildes vorliegt, wobei das Verfahren die Folgenden Schritte umfasst:

   - Extrahieren (E20) von Punkten von Interesse in dem Bild,
   - Beschreiben (E21) jedes extrahierten Punktes von Interesse mit Hilfe eines Vektors, der für die Form des Bildes in einer Nachbarschaft des Punktes von Interesse repräsentativ ist,
   - Bestimmen (E22) eines visuellen Wortes für jeden extrahierten Punkt von Interesse, wobei das visuelle Wort anhand des charakteristischen Vektors so bestimmt wird, dass charakteristische Vektoren in der Nähe mit demselben visuellen Wort assoziiert sind,
   - Bestimmen (E24) eines oder mehrerer Hash-Polynome für jeden Punkt von Interesse,
   - Klassifizieren (E25) des Dokuments in eine Klasse einer Vielzahl von Klassen anhand eines Scores, der anhand der Hash-Polynome bestimmt wird, wobei der Score ein Durchschnitt von Gewichten der Hash-Polynome in dem Dokument ist;

   **dadurch gekennzeichnet, dass**:

   - jeder für die Form des Bildes repräsentative Vektor anhand einer kreisförmigen Nachbarschaft um jeden Punkt von Interesse herum bestimmt wird, wobei die kreisförmige Nachbarschaft auf den Gradientenvektor des Punktes von Interesse ausgerichtet ist und mindestens einen Kreis umfasst, wobei der Kreis in eine Vielzahl von Zonen eingeteilt ist, wobei jede Zone jedes Kreises eine identische Oberfläche aufweist, wobei die Koordinaten jedes für die Form des Bildes repräsentativen Vektors anhand eines Gradientenvektors des Punktes von Interesse und des Durchschnitts der Gradientenvektoren in jeder Zone der kreisförmigen Nachbarschaft des Punktes von Interesse erhalten werden;
   dass jedes Hash-Polynom mindestens ein erstes visuelles Wort, das mit dem Punkt von Interesse, der als Ankerpunkt des Hash-Polynoms dient, assoziiert ist, und eine Folge von Positionen in einer Liste, die den Kontext des ersten visuellen Wortes angibt, umfasst, wobei die Liste aus zweiten visuellen Wörtern besteht, die nach zunehmendem Abstand ihrer räumlichen Position in dem Bild bezogen auf eine räumliche Position in dem Bild des ersten visuellen Wortes geordnet sind, wobei jede Position der Folge von Positionen entweder ein leeres Element oder das zweite visuelle Wort, das an dieser Position in der Liste vorhanden ist, ist.

2. Verfahren nach Anspruch 1, **dadurch gekennzeichnet, dass** ein Hash-Polynom ein Bigramm ist.

3. Verfahren nach Anspruch 1 oder 2, **dadurch gekennzeichnet, dass** der Kontext ferner einen Zwischenraum umfasst, der die Anzahl von Zwischenwörtern angibt, die zwischen dem Ankerpunkt und dem zweiten visuellen Wort vorhanden sind.

4. Verfahren nach Anspruch 1, 2 oder 3, **dadurch gekennzeichnet, dass** die kreisförmige Nachbarschaft zwei Kreise umfasst, wobei der Kreis mit dem kleinsten Radius vier Zonen umfasst und die Beabstandung zwischen den Kreisen acht Zonen umfasst, wobei die zwölf Zonen eine identische Oberfläche aufweisen.

5. Verfahren nach einem der vorhergehenden Ansprüche, **dadurch gekennzeichnet, dass** das Extrahieren der Punkte von Interesse durch das Berechnen von partiellen zweiten Ableitungen für jedes Pixel, durch das Berechnen der Determinante der Hesse-Matrix ausgeführt wird und dass die Punkte von Interesse den lokalen Maxima der Determinanten der Hesse-Matrix entsprechen.

6. Verfahren nach Anspruch 5, **dadurch gekennzeichnet, dass** die Ableitungen anhand von integralen Bildern berechnet werden.

7. Vorrichtung zur Klassifizierung eines Dokuments nach seinem Aussehen, wobei das Dokument in der Form eines aus Pixeln bestehenden Bildes vorliegt, wobei die Vorrichtung Folgendes umfasst:

   - Mittel zum Extrahieren von Punkten von Interesse in dem Bild,
   - Mittel zum Beschreiben jedes extrahierten Punktes von Interesse mit Hilfe eines Vektors, der für die Form des Bildes in einer Nachbarschaft des Punktes von Interesse repräsentativ ist,
   - Mittel zum Bestimmen eines visuellen Wortes für jeden extrahierten Punkt von Interesse, wobei das visuelle Wort anhand des charakteristischen Vektors so bestimmt wird, dass charakteristische Vektoren in der Nähe mit demselben visuellen Wort assoziiert sind,
   - Mittel zum Bestimmen eines oder mehrerer Hash-Polynome für jeden Punkt von Interesse,
   - Mittel zum Klassifizieren des Dokuments in eine Klasse einer Vielzahl von Klassen anhand eines Scores, der anhand der Hash-Polynome bestimmt wird, wobei der Score auf einem Durchschnitt von Gewichten der Hash-Polynome in dem Dokument basiert; **dadurch gekennzeichnet, dass** die Vorrichtung Folgendes beinhaltet:

- Mittel zum Bestimmen von für die Form des Bildes repräsentativen Vektoren anhand einer kreisförmigen Nachbarschaft um jeden Punkt von Interesse herum, wobei die kreisförmige Nachbarschaft auf den Gradientenvektor des Punktes von Interesse ausgerichtet ist und mindestens einen Kreis umfasst, wobei der Kreis in eine Vielzahl von Zonen eingeteilt ist, wobei jede Zone jedes Kreises eine identische Oberfläche aufweist, wobei die Koordinaten jedes für die Form des Bildes repräsentativen Vektors anhand eines Gradientenvektors des Punktes von Interesse und des Durchschnitts der Gradientenvektoren in jeder Zone der kreisförmigen Nachbarschaft des Punktes von Interesse erhalten werden;

und dadurch, dass

jedes Hash-Polynom mindestens ein erstes visuelles Wort, das mit dem Punkt von Interesse, der als Ankerpunkt des Hash-Polynoms dient, assoziiert ist, und eine Folge von Positionen in einer Liste, die den Kontext des ersten visuellen Wortes angibt, umfasst, wobei die Liste aus zweiten visuellen Wörtern besteht, die nach zunehmendem Abstand ihrer räumlichen Position in dem Bild bezogen auf eine räumliche Position in dem Bild des ersten visuellen Wortes geordnet sind, wobei jede Position der Folge von Positionen entweder ein leeres Element oder das zweite visuelle Wort, das an dieser Position in der Liste vorhanden ist, ist.

8. Computerprogramm, **dadurch gekennzeichnet, dass** es Anweisungen zum Umsetzen des Verfahrens nach einem der Ansprüche 1 bis 6 durch eine Vorrichtung (10) beinhaltet, wenn das Programm durch einen Prozessor (100) der Vorrichtung ausgeführt wird.

9. Speichermittel, **dadurch gekennzeichnet, dass** sie ein Computerprogramm speichern, das Anweisungen zum Umsetzen des Verfahrens nach einem der Ansprüche 1 bis 6 durch eine Vorrichtung (10) beinhaltet, wenn das Programm durch einen Prozessor (100) der Vorrichtung ausgeführt wird.

**Claims**

1. Method for classifying a document on the basis of its visual appearance, the document taking the form of an image made up of pixels, the method comprising the steps of:

- extracting (E20) keypoints in the image,

- describing (E21) each extracted keypoint using a vector representative of the shape of the image in a neighbourhood of the keypoint,
- determining (E22) one visual word for each extracted keypoint, the visual word being determined on the basis of the characteristic vector such that similar characteristic vectors are associated with the same visual word,
- determining (E24) one or more hash polynomials for each keypoint,
- classifying (E25) the document, into one class of a plurality of classes, on the basis of a score determined on the basis of the hash polynomials, the score being an average of weights of the hash polynomials present in the document;

**characterized in that**:

- each vector representative of the shape of the image is determined on the basis of a circular neighbourhood around each keypoint, the circular neighbourhood being aligned with the gradient vector of the keypoint and comprising at least one circle, said circle being divided into a plurality of regions, each region of each circle having an identical area, the coordinates of each vector representative of the shape of the image being obtained on the basis of a gradient vector of the keypoint and of the average of the gradient vectors in each region of the circular neighbourhood of the keypoint;
**in that** each hash polynomial comprises at least one first visual word associated with the keypoint, which serves as anchor point of the hash polynomial, and a sequence of positions in a list that specifies the context of the first visual word, the list being made up of second visual words arranged in order of increasing distance of their spatial position in the image with respect to a spatial position in the image of the first visual word, each position of the sequence of positions being either an empty element or the second visual word present at this position in said list.

2. Method according to Claim 1, **characterized in that** a hash polynomial is a bigram.

3. Method according to Claim 1 or 2, **characterized in that** the context furthermore comprises a separation that specifies the number of intermediate words present between the anchor point and the second visual word.

4. Method according to Claim 1, 2 or 3, **characterized in that** the circular neighbourhood comprises two circles, the circle having the smallest radius comprising four regions and the space between the circles comprising eight regions, the twelve regions having an identical area.

**5.** Method according to any one of the preceding claims, **characterized in that** the keypoints are extracted by computing, for each pixel, partial second derivatives, by computing the determinant of the Hessian matrix, and **in that** the keypoints correspond to the local maxima of the determinants of the Hessian matrix.

**6.** Method according to Claim 5, **characterized in that** the derivatives are computed on the basis of complete images.

**7.** Device for classifying a document on the basis of its visual appearance, the document taking the form of an image made up of pixels, the device comprising:

- means for extracting keypoints in the image,
- means for describing each extracted keypoint using a vector representative of the shape of the image in a neighbourhood of the keypoint,
- means for determining one visual word for each extracted keypoint, the visual word being determined on the basis of the characteristic vector such that similar characteristic vectors are associated with the same visual word,
- means for determining one or more hash polynomials for each keypoint,
- means for classifying the document, into one class of a plurality of classes, on the basis of a score determined on the basis of the hash polynomials, the score being based on an average of weights of the hash polynomials present in the document;

**characterized in that** the device comprises:

means for determining vectors representative of the shape of the image on the basis of a circular neighbourhood around each keypoint, the circular neighbourhood being aligned with the gradient vector of the keypoint and comprising at least one circle, said circle being divided into a plurality of regions, each region of each circle having an identical area, the coordinates of each vector representative of the shape of the image being obtained on the basis of a gradient vector of the keypoint and of the average of the gradient vectors in each region of the circular neighbourhood of the keypoint,
and **in that**
each hash polynomial comprises at least one first visual word associated with the keypoint, which serves as anchor point of the hash polynomial, and a sequence of positions in a list that specifies the context of the first visual word, the list being made up of second visual words arranged in order of increasing distance of their spatial position in the image with respect to a spatial position in the image of the first visual word, each position of the sequence of positions being either an empty element or the second visual word present at this position in said list.

**8.** Computer program, **characterized in that** it comprises instructions for implementing, with a device (10), the method according to any one of Claims 1 to 6 when said program is executed by a processor (100) of said device.

**9.** Storage means, **characterized in that** they store a computer program comprising instructions for implementing, with a device (10), the method according to any one of Claims 1 to 6 when said program is executed by a processor (100) of said device.

Fig. 1

E20 — Extraction points d'intérêt

E21 — Description points d'intérêt

E22 — Classification points d'intérêt

E24 — Génération bigramme

E25 — Classification document

# Fig. 2

301 |  |  |  | 302

| 1 | 1 | 1 | -2 | -2 | -2 | 1 | 1 | 1 |
| 1 | 1 | 1 | -2 | -2 | -2 | 1 | 1 | 1 |
| 1 | 1 | 1 | -2 | -2 | -2 | 1 | 1 | 1 |
| 1 | 1 | 1 | -2 | -2 | -2 | 1 | 1 | 1 |
| 1 | 1 | 1 | -2 | -2 | -2 | 1 | 1 | 1 |

303

## Fig. 3a

311

312

313

| 1 | 1 | 1 | 1 | 1 |
| 1 | 1 | 1 | 1 | 1 |
| 1 | 1 | 1 | 1 | 1 |
| -2 | -2 | -2 | -2 | -2 |
| -2 | -2 | -2 | -2 | -2 |
| -2 | -2 | -2 | -2 | -2 |
| 1 | 1 | 1 | 1 | 1 |
| 1 | 1 | 1 | 1 | 1 |
| 1 | 1 | 1 | 1 | 1 |

## Fig. 3b

321 |  |  | 322

323 |  |  | 324

| 1 | 1 | 1 |  | -1 | -1 | -1 |
| 1 | 1 | 1 |  | -1 | -1 | -1 |
| 1 | 1 | 1 |  | -1 | -1 | -1 |
| -1 | -1 | -1 |  | 1 | 1 | 1 |
| -1 | -1 | -1 |  | 1 | 1 | 1 |
| -1 | -1 | -1 |  | 1 | 1 | 1 |

## Fig. 3c

401 | 402

| -1 | -1 | -1 | | 1 | 1 | 1 |
|----|----|----|---|---|---|---|
| -1 | -1 | -1 | | 1 | 1 | 1 |
| -1 | -1 | -1 | | 1 | 1 | 1 |
| -1 | -1 | -1 | | 1 | 1 | 1 |
| -1 | -1 | -1 | | 1 | 1 | 1 |
| -1 | -1 | -1 | | 1 | 1 | 1 |
| -1 | -1 | -1 | | 1 | 1 | 1 |

## Fig. 4a

411

| -1 | -1 | -1 | -1 | -1 | -1 | -1 |
|----|----|----|----|----|----|----|
| -1 | -1 | -1 | -1 | -1 | -1 | -1 |
| -1 | -1 | -1 | -1 | -1 | -1 | -1 |
| | | | | | | |
| 1 | 1 | 1 | 1 | 1 | 1 | 1 |
| 1 | 1 | 1 | 1 | 1 | 1 | 1 |
| 1 | 1 | 1 | 1 | 1 | 1 | 1 |

412

## Fig. 4b

Fig. 5a

Fig. 5b

Fig. 6a

Fig. 6b

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6711293 B
- US 8165401 B
- FR 2984541

**Littérature non-brevet citée dans la description**

- Combining winnow and orthogonal sparse bigrams for incremental spam filtering. **C. SIEFKES ; F ASSIS ; S CHHABRA ; W.S YERAZUNIS.** Proceedings of ECML/PKDD, LNCS. Springer Verlag, 2004, 410-420
- **HARRIS ; M STEPHENS.** A combined corner and edge détecter. *proceedings of the fourth Alvey vision conférence,* 1998, 147-152
- Distinctive image features from scale invariant key-points. *Int. J. Comput. Vision,* Novembre 2004, vol. 60 (2), ISSN 0920 5691, 91-110